# EUROPEAN PATENT APPLICATION

(11) **EP 1 049 312 A2**
(43) Date of publication of application: **02.11.2000**
(21) Application number: 00108939.0
(22) Date of filing: 27.04.2000
(51) Int. Cl.: H04M 1/725, H04Q 7/32

(54) **Multi-functional mobile communication terminal**

(30) Priority: 28.04.1999 KR 9915190; 26.05.1999 KR 9918994; 10.07.1999 KR 9927882; 20.07.1999 KR 9929274
(71) Applicant: Um, Sang-seop, Incheon-shi (KR); JI Telecom Co., Ltd., Seoul (KR)
(72) Inventor: Um, Sang-seop, Incheon-shi (KR)
(74) Representative: Neubauer, Hans-Jürgen, Dipl.-Phys.

(57) **Abstract**

There is provided a multi-functional mobile communication terminal, including: a microcomputer for controlling reception of a digital audio data signal compressed by an MP3 encoder or AAC encoder through a wire public telecommunication network using a PC and a connecting apparatus or a radio public telecommunication network or downloading of digital audio data such as MP3 file from the Internet to compress and store it, and performing a corresponding control operation according to a keyboard signal input; a signal inputting section configured of a plurality of buttons, for inputting a signal that a user wants into the microcomputer; a memory for compressing and storing the downloaded digital audio data and, in case of performing a recording function, storing voice data of a counterpart; an audio decoder for reproducing the data compressed by the memory as the original audio signal before compressed to convert it into the audio signal that the user can hear; an audio controller for reproducing the audio signal from the audio decoder under the control of the microcomputer and outputting it through an audio outputting section; an LCD for displaying a current control state under the control of the microcomputer; an earphone jack as a transmission path for inputting/outputting the audio signal to other media; a microphone for amplifying a voice signal to a predetermined level in order to perform the recording function; and a CODEC for encoding the voice signal input through the microphone.

## Description

### BACKGROUND OF THE INVENTION

### 1. Field of the Invention

The present invention relates to a radio mobile communication terminal and, more particularly, to a mobile communication terminal capable of functioning as a recorder as well as a terminal, which has an additional extended memory placed at the inside or outside thereof, the extended memory storing an MP3 file downloaded from the Internet so that its user can listen to the music from the MP3 file when the terminal is not being used, the terminal's battery having a plurality of buttons through which main functions are added to allow the user to be able to hear the music only using the battery.

### 2. Description of the Related Art

In general, a mobile communication terminal is referred to as PCS phone, cellular phone and PIM. The term "cellular phone" comes from the fact that a radio mobile communication system divides a communication area into cells to manage each of them. The mobile communication terminal disclosed in this specification means various types of potable communication terminals manufactured to transmit/receive voice or data to/from a base station in radio for public telecommunications, and includes cellular phones, PCS phones, IMT-2000 terminals, GSM terminals and so on.

This mobile communication terminal is constructed of an input section serving as a user's input means, an LCD for displaying the state of use and information, a mobile communication section corresponding to a body communicating with the base station of the radio mobile communication system, a controller for generating predetermined control signals for mobile communications or performance of various functions, and a case for protecting the above-described components from external shock or vibration. The mobile communication terminal is roughly classified into the one using a frequency of 700-800MHz. the one using 1700-1800MHz and the one using 2GHz.

However, the aforementioned conventional motile communication terminal has the only function as the terminal although its user carries it all the time. This is inconvenient for the user who also carries other electronic apparatuses such as MP3 player, potable cassette player and PIM. Accordingly, it is strongly required that some functions of other potable apparatuses are added to the mobile communication terminal the user always carries to allow he/she to be able to easily record voice such as conversation with a counterpart only using the mobile terminal and to store and reproduce digital audio data such as MP3 file through a PC connection device.

### SUMMARY OF THE INVENTION

It is, therefore, an object of the present invention to provide a mobile communication terminal capable of performing not only a basic communication function but also a voice recording function and MP3 file storing and reproducing functions.

To accomplish the object of the present invention, there is provided a mobile communication terminal including communication means for downloading digital audio data through wire and radio communication networks and the Internet, storage means for storing the digital audio data downloaded through the communication means, reproduction means for reproducing data that a user wants among the digital audio data stored in the storage means, outputting means for outputting a signal reproduced by the reproduction means, and recording means for recording and storing voice and then reproducing it.

In a preferred embodiment of the present invention, an additional extended memory pack is detachably set at the inside or outside of the terminal, and a wire remote control is attached to the exterior of the terminal, to improve the user's convenience.

In a preferred embodiment of the present invention, the terminal's battery itself has a voice recording function, digital audio data signal storing and reproducing functions. That is, the battery includes a separate microcomputer, digital audio data decoder and input/output devices so that the digital audio data can be stored and reproduced and voice can be recorded only using the battery itself without regard to the terminal. These additional devices can operate even when there is no separate power supply for them because they use the battery power.

### BRIEF DESCRIPTION OF THE DRAWINGS

The invention can be more fully understood by reading the following detailed description of the preferred embodiments, with reference made to the accompanying drawing, wherein:
Fig. 1 is a block diagram showing the configuration of a multi-functional mobile communication terminal according to the present invention;
Fig. 2 is a flow chart showing the operation procedure of the multi-functional mobile communication terminal according to the present invention;
Fig. 3 is a side view for explaining the extended memory of the multi-functional mobile communication terminal according to the present invention;
Fig. 4 is a perspective view of the battery of Fig. 3;
Fig. 5 is a perspective view for explaining the extended buttons of the multi-functional mobile communication terminal according to the present invention; and
Fig. 6 is a constructive view showing a multi-functional terminal battery pack, according to an embodiment of the present invention.

### DETAILED DESCRIPTION OF THE PREFERRED EMBODIMENT

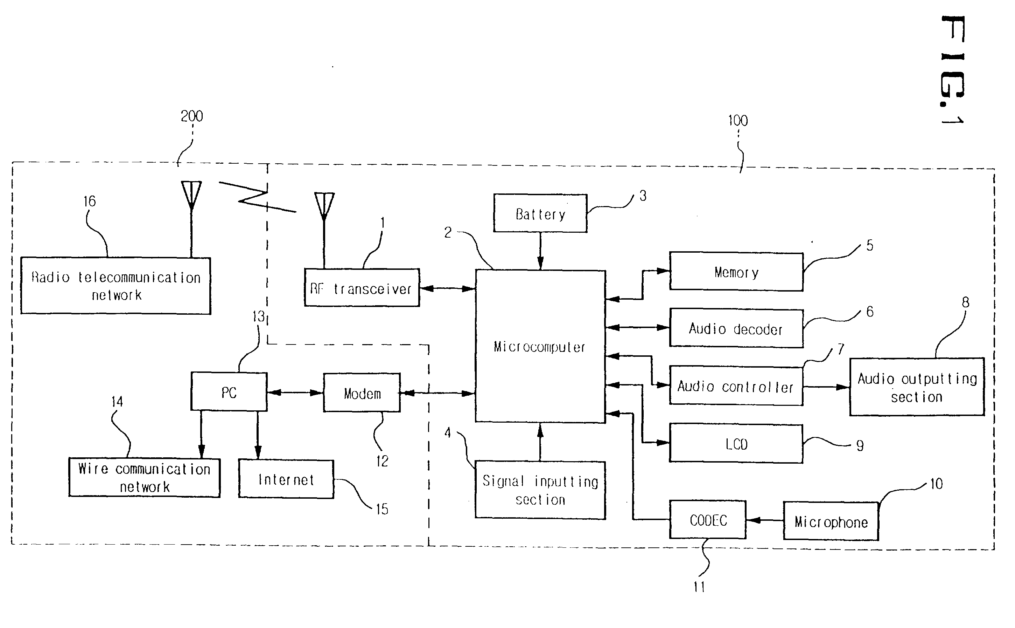

Fig. 1 is a block diagram showing the configuration of the multi-functional mobile communication terminal 100 and communication means 200 connected thereto in accordance with the present invention. The multi-functional mobile communication terminal 100 of the present invention includes an RF transceiver 1 for receiving external sky wave broadcasting signals through a radio public telecommunication network, a microcomputer 2 connected to the RF transceiver 1 to perform a corresponding control, a battery 3 additionally attached to the terminal for supplying operation power to the microcomputer 2, a signal inputting section 4 configured of a plurality of buttons for inputting a signal that a user wants into the microcomputer 2, a digital audio data memory 5 for compressing and storing digital audio data downloaded through a PC and, when performing recording function, storing voice data of a counterpart, an audio decoder 6 for reproducing the compressed data stored in the digital audio data memory 5 as the original audio signal that has not been compressed, an audio controller 7 for controlling the reproduction of the audio signal from the audio decoder 6 under the control of the microcomputer 2, an audio outputting section 8 configured of a speaker and an earphone for outputting the signal reproduced by the audio controller 7, an LCD 9 for displaying a current control state under the control of the microcomputer 2, a microphone 10 for carrying out the recording function, and a CODEC 11 for encoding the voice signal input through the microphone 10.

The communication means 200 includes a modem 12 connected to the microcomputer 2 of the terminal 100 for transmitting and receiving signals, a PC 13 connected to the modem 12, a wire communication network 14 and the Internet 15 which are connected to the PC 13, and a radio public telecommunication network 16 for transmitting signals in radio to the RF transceiver 1 of the terminal 1. The operation of the multi-functional mobile communication terminal constructed as above is explained below.

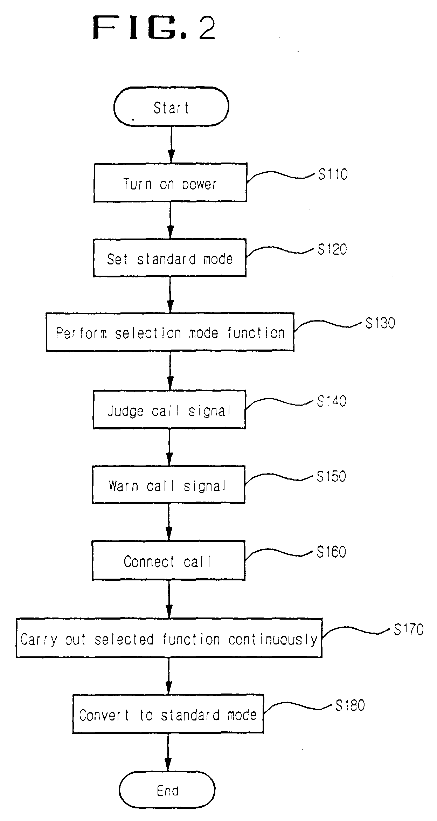

Fig. 2 is a flow chart showing the operation procedure of the multi-functional mobile communication terminal according to the present invention. The power button of the multi-functional mobile communication terminal is pushed to turn on the terminal in a step S110, and a standard mode is set to make the mobile terminal be in the standby state in a step S120. When the user pushes a digital audio mode button of the signal inputting section 4 while the mobile terminal stands by in the standard mode, a digital audio mode function is enabled in a selection mode performing step S130. In this step S130, input values of the buttons vary according to corresponding functions. For example, "playback", "stop", "next" and "previous" buttons may be included in case of digital audio mode, "FM/AM selection", "channel scan", "tuning" and "recording" buttons may be included in case of audio mode, and "recording", "stop", "playback" and "reservation" buttons may be included in case of recording mode.

When a call is received through a radio mobile communication system in a call judgement step S140 even while a mode selected by the user is carried out, the mode's function is interrupted for the moment and a call informing step S150 is performed to inform the user of reception of call. Here, informing the user of call reception may be carried out through the telephone ring, vibration or continuous flickering of lamp. After the call informing step S150, upon listening to the warning of call reception, the user opens the cover of the mobile terminal or pushes its call button to connect to the speech path to a called part whom the user wants to call in a call connecting step S160. When the user shuts the cover or pushes the termination button after finishing the call in the call connecting step S160, a step S170 is executed to go on with performing corresponding function interrupted due to the call and then a standard mode button is pushed to convert the mode to the standard mode in a standard mode conversion step S180.

The multi-functional mobile communication terminal which operates according to the aforementioned procedure has main functions of a basic communication function, a function of storing and reproducing digital audio data such as MP3 file, and a recording function. There is described below the detailed configuration of the mobile terminal of the present invention according to each of the functions. First of all, the recording function of the mobile terminal of the present invention is explained. In case where the mobile terminal is used as a recorder, when a recording start button (for example, button #) of the signal inputting section 4 is pushed, the microcomputer 2 recognizes it as initiation of recording. In this state, when the counterpart's voice data is input through the microphone 10, being amplified to a predetermined level, the data is encoded by the CODEC 11 to be stored in the digital audio data memory 5, that is, fresh memory. When the user wants to hear the recorded voice, he/she pushes the playback button (for example, button *) of the signal inputting section 4. Then, microcomputer 2 recognizes that the playback button is ON to bring the voice data out of the digital audio data memory 5, outputting it through the speaker. By doing so, the user can hear the recorded content.

The digital audio data storing and reproducing functions of the present invention is described below. There are three methods for receiving the digital audio data. The first one is that the digital audio data is received by the microcomputer 2 through the wire public telecommunication network 14 and modem 12. The second one is that the digital audio data signal is received by the microcomputer 2 through the modem 12 according to the PC's command by the medium of the PC 13. The third one is that the user requests an audio data providing center connected to the base station through the wire and radio communication networks to provide the digital audio data through the base station to which the mobile telephone is connected so that the data is received and input to the microcomputer 2.

When the microcomputer 2 receives the digital audio data using one of the three methods, it compresses it and then stores it in the digital audio data memory 5. This digital audio data can be reproduced as the original signal using the audio decoder 6 when the user wants to hear it. Specifically, when the user selects a desired file among the digital audio files stored in the digital audio data memory 5 through the signal inputting section 4, this information is input to the microcomputer 2 to generate a corresponding control signal. Accordingly, the digital audio file selected from the digital audio data memory 5 is decoded by the audio decoder to be output through the audio outputting section 8 such as earphone or speaker. By doing so, the user can listen to the music. Here, the audio decoder 6 can be configured of MP3 (MPEG-1 layer 3) decoder, AAC (MPEG-2 Advance Audio Coding) decoder or a decoder capable of decoding both of MP3 and AAC.

Next, the audio function of the present invention is explained. The broadcasting signal coming from an external broadcasting station is received by the antenna of the mobile terminal and the receiving part of the RF transceiver 1 through the radio public telecommunication network 16, and delivered to the audio decoder under the control of the microcomputer 2. The broadcasting signal sent to the audio decoder 6 is then converted into an audible signal to be output through the audio controller 7 and audio outputting section 8 such as earphone jack, allowing the user to be able to listen to the music.

The memory extension function according to the present invention will be explained below.

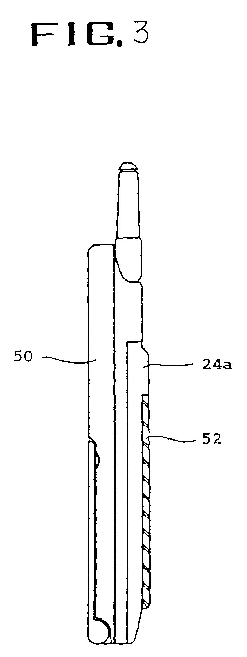

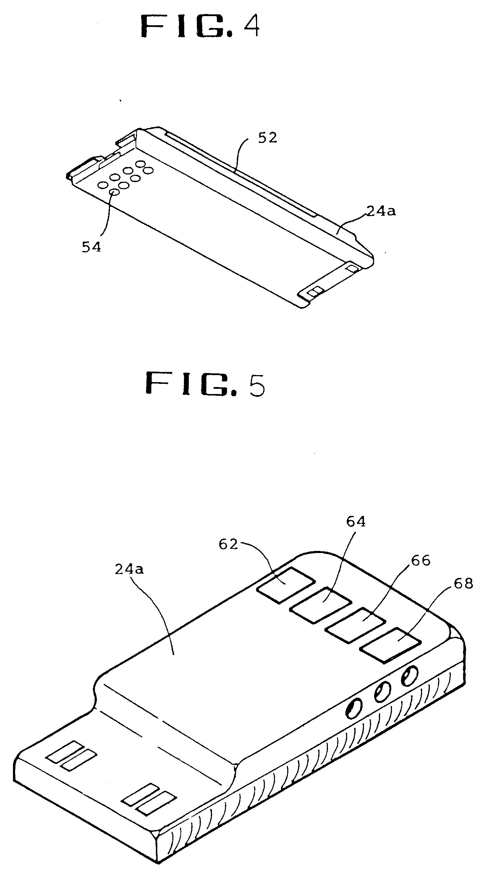

Fig. 3 is a side view of the multi-functional mobile terminal's battery to which the extended memory is attached. Referring to Fig. 3, a battery 24a for supplying power according to charging/discharging is placed at the back of the mobile terminal 50, and the extended memory 52 with a predetermined thickness is detachably attached on a part of the back of the battery 24a. Specifically, the attached portion of the extended memory 52 has plural protrusions while that of the battery 24a has plural recessions corresponding to the protrusions so that the extended memory 52 is pushed by a little force to be combined with the battery 24a, thereby being fixed. The extended memory 52 contains a connection terminal for being electrically connected to the microcomputer 2 of the mobile terminal. That is, as shown in Fig. 4, the extended memory 52 has a connection terminal 54 penetrating the battery 24a, to be connected to the microcomputer 2.

Though the mobile terminal explained in the above-described embodiment is a bar type or flip type, the present invention can be applied to a folder type terminal by using the back of its battery. Meantime, in order to apply the digital audio reproducing function, audio function and recording function to a single mobile terminal, it can be constructed in a manner that a single physical button performs multiple functions. It is however preferable that buttons for the three functions are separately prepared for the user's convenience. Though the digital audio function can be contained inside the body of the mobile terminal, it may also be placed on the back of the terminal's battery. In this case, without purchasing the multi-functional mobile terminal, the user can convert a simple single-function mobile terminal into the multi-function. This embodiment is described below with reference to Fig. 5.

Function buttons 62, 64, 66 and 68 for all the functions of an MP3 player and voice recorder (VR) are set on the back of the terminal's battery pack 24a separately from the terminal's body so that they can be used employing the terminal's battery pack power. Further, the digital audio signal input/output terminal and extended memory pack can be attached separately from the terminal. By replacing the battery of the simple single-function out-of-data model terminal with the multi-functional terminal battery pack of the present invention, the out-of-data model terminal can be convened into a new model mobile terminal.

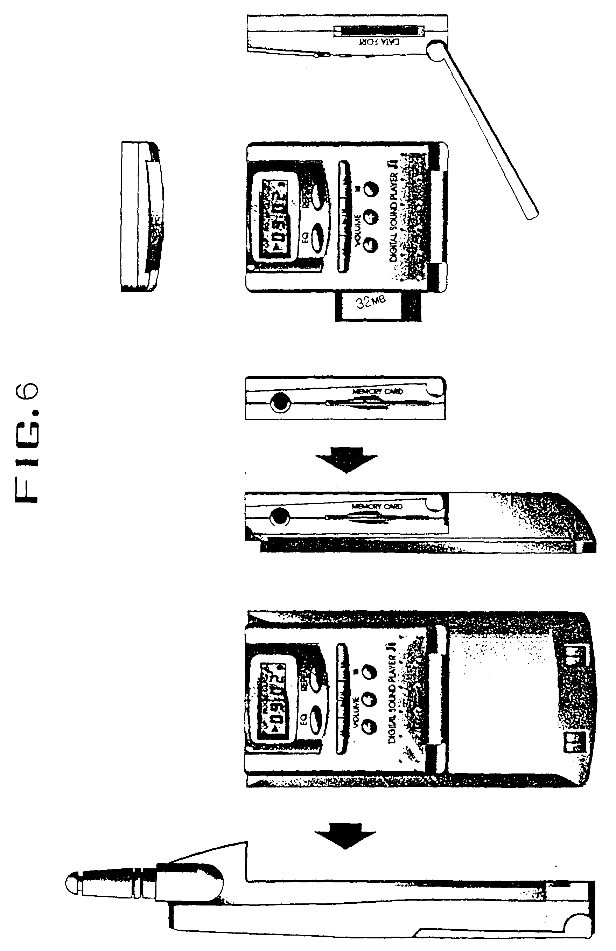

Fig. 6 shows an embodiment of this multi-functional terminal battery pack. In this embodiment, the battery pack has PLAY, STOP/PAUSE, FF, REW, REPEAT, VOLUME UP/DOWN buttons, and has an input terminal to be connected to a PC interface for downloading a digital audio signal. The battery pack also has an earphone jack for outputting a reproduced audio signal to an external medium, and includes an LCD for displaying function operation states. This makes it possible that the MP3 player and voice recorder can operate using only the battery pack by no help of the functions of the terminal body. In this embodiment, power of the terminal's battery pack is commonly used, and when the battery is required to be replaced due to its power consumption only a battery cell placed at the lower part of the pack is taken out to be replaced with a new one. The explanation for the function and operation of each of the components is omitted since it is similar to that of the aforementioned first embodiment of the multi-functional mobile communication terminal.

Meantime, the multi-functional mobile communication terminal also has a function capable of using radio data communication. With using this function, it is possible to obtain a digital audio file from an Internet site through the radio public telecommunication network 16 anytime anywhere without downloading it from the PC 13 and to store and reproduce it.

According to the first and second embodiment of the present invention, the recording function, audio function, digital audio reproducing function and memory extending function are given to the mobile communication terminal that the user always carries with him/her, to thereby solve the user's inconvenience caused by using of separate communication apparatus and audio apparatus. Further, when the user connects to the Internet through radio data communication using the mobile communication terminal, obtainment, storage and reproduction of the digital audio file can be performed in one-stop by the apparatus of the present invention, improving the user's convenience and satisfaction.

As described above, the mobile communication terminal of the present invention can store and reproduce the digital audio signal such as MP3 file through the Internet, perform the audio function of AM and FM and carry out recording function through the microphone in addition to the communicating function as the terminal, being capable of serving as a multi-functional terminal. Furthermore, an additional extended memory pack is attached to a predetermined portion of the inside or outside of the terminal to secure a large capacity memory, enabling storing or recording of a large quantity of MP3 file. Especially, the above-described main functions are separately added to the battery itself to allow the battery to be able to store, reproduce the MP3 file and record voice. Accordingly, when a user who already had a conventional single-function terminal replaces only the battery thereof with the battery having the multiple functions of the present invention, he/she can use the conventional terminal as the multi-functional mobile terminal. Moreover, the recorder and digital audio player share the memory to realize a simple design in the configuration of the terminal.

## Claims

1. A multi-functional mobile communication terminal, comprising:
a microcomputer for controlling reception of a digital audio data signal compressed by an MP3(MPEG-1 layer3) encoder or AAC(MPEG-2 Advanced Audio Coding) encoder through a wire public telecommunication network using a PC and a modem connecting apparatus or a radio public telecommunication network or downloading of digital audio data such as MP3 file from the Internet to compress and store it, and performing a corresponding control operation according to a keyboard signal input;
a signal inputting section configured of a plurality of buttons, for inputting a signal that a user wants into the microcomputer:
a memory for compressing and storing the downloaded digital audio data and, in case of performing a recording function, storing voice data of a counterpart;
an audio decoder for reproducing the data compressed by the memory as the original audio signal before compressed to convert it into the audio signal that the user can hear;
an audio controller for reproducing the audio signal from the audio decoder under the control of the microcomputer and outputting it through an audio outputting section;
an LCD for displaying a current control state under the control of the microcomputer;
an earphone jack as a transmission path for inputting/outputting the audio signal to other media;
a microphone for amplifying a voice signal to a predetermined level in order to perform the recording function; and
a CODEC for encoding the voice signal input through the microphone.

2. The multi-functional mobile communication terminal as claimed in claim 1, wherein, separately from the memory, an extended memory is detachably set at the inside and/or outside of the terminal or at the inside and/or outside of the terminal's battery using a click hook for extension of the memory, to download and store the digital audio data.

3. The multi-functional mobile communication terminal as claimed in claim 1, wherein, when a call is received in a radio mobile communication system while the reproduced audio data is received as a voice signal through an earphone, a calling ring is simultaneously heard through the earphone by a reception part who is receiving the reproduced audio data under the control of the microcomputer, to allow the reception part to be able to receive the call even during listening to the music and, after the call reception is completed, to hear the music again according to the control of the microcomputer.

4. The multi-functional mobile communication terminal as claimed in claim 1, wherein there is provided a wire remote control having function buttons PLAY, FF AND REW for externally playing, fast forwarding and rewinding the digital audio data stored in the memory, and buttons for stopping hearing of music to transmit/receive a call when the cell is received.

5. An MP3 player and voice recorder integrated with a battery pack of a mobile communication terminal, constructed in such a manner that the MP3 player and voice recorder including a microcomputer, memory, digital audio data signal encoder and decoder, which function independently from the terminal which is a general terminal not a multi-functional mobile communication terminal, are integrated into the battery pack set on the terminal, the terminal's battery pack has playback, recording, reverse and forward buttons on the back thereof and has an input/output terminal and stereo headphone jack on the side thereof, and the terminal's battery power is commonly used to operate the battery pack as the MP3 player or voice recorder without regard to the mobile communication terminal.

6. The MP3 player and voice recorder as claimed in claim 5, wherein, in case where the MP3 player and voice recorder are integrated into the terminal's battery, the MP3 player and voice recorder are set at the upper case of the battery pack and the batten is set at its lower case so that only the lower case is separated from the pack to be replaced when the battery is required to be replaced due to its power consumption.

7. The MP3 player and voice recorder as claimed in claim 5, wherein an extended memory is detachably set on a predetermined portion of the inside and/or outside of the terminal's battery using a click hook, separately from the memory included in the battery, to secure a large capacity memory, enabling storing or recording a large quantity of MP3 file.
